(19) Europäisches Patentamt
European Patent Office
Office européen des brevets

(11) **EP 2 285 223 B1**

(12) **EUROPEAN PATENT SPECIFICATION**

(45) Date of publication and mention of the grant of the patent:
**18.05.2016 Bulletin 2016/20**

(21) Application number: **09723381.1**

(22) Date of filing: **10.03.2009**

(51) Int Cl.:
*A01N 43/80* (2006.01)    *A01P 13/00* (2006.01)
*A01N 43/56* (2006.01)    *A01N 43/42* (2006.01)
*A01N 43/40* (2006.01)    *A01N 43/50* (2006.01)
*A01N 43/70* (2006.01)    *A01N 43/707* (2006.01)
*A01N 43/64* (2006.01)    *A01N 47/36* (2006.01)

(86) International application number:
**PCT/EP2009/052784**

(87) International publication number:
**WO 2009/115433 (24.09.2009 Gazette 2009/39)**

(54) **HERBICIDAL COMPOSITIONS COMPRISING PYROXASULFONE IV**

HERBIZIDE ZUSAMMENSETZUNGEN, DIE PYROXASULFON IV ENTHALTEN

COMPOSITIONS HERBICIDES COMPRENANT PYROXASULFONE IV

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**RS**

(30) Priority: **20.03.2008 US 38178**

(43) Date of publication of application:
**23.02.2011 Bulletin 2011/08**

(73) Proprietor: **BASF SE**
**67056 Ludwigshafen am Rhein (DE)**

(72) Inventors:
• **SIEVERNICH, Bernd**
  **67454 Hassloch (DE)**
• **SIMON, Anja**
  **69469 Weinheim (DE)**

• **MOBERG, William, Karl**
  **67454 Hassloch (DE)**
• **EVANS, Richard, R.**
  **Raleigh**
  **North Carolina 27613 (US)**

(74) Representative: **BASF IP Association**
**BASF SE**
**ZRX-C6**
**67056 Ludwigshafen (DE)**

(56) References cited:
**EP-A1- 2 123 158        WO-A1-2008/075743**
**WO-A2-2009/141367    US-A1- 2005 256 004**

Remarks:
The file contains technical information submitted after the application was filed and not included in this specification

**Description**

The present invention relates to herbicidally active compositions, which comprise 3-[5-(difluoromethoxy)-1-methyl-3-(trifluoromethyl)pyrazol-4-ylmethylsulfonyl]-4,5-dihydro-5,5-dimethyl-1,2-oxazole [common name pyroxasulfone] and metazachlor.

Background of the invention

In crop protection, it is desirable in principle to increase the specificity and the reliability of the action of active compounds. In particular, it is desirable for the crop protection product to control the harmful plants effectively and, at the same time, to be tolerated by the useful plants in question.

Pyroxasulfone has been described in EP-A 1364946 and US 2005/0256004.

Although pyroxasulfone is a highly effective pre-emergence herbicide, its activity at low application rates is not always satisfactory. Moreover, pyroxasulfone is known to have only poor post-emergence activity (Y. Yamaji et al., "Application timing and field performance of KIH-485", Conference Abstract 1-1-ii-12B of 11. IUPAC International Congress of Pesticide Chemistry, 2006 Kobe, Japan). Apart from that, its compatibility with certain dicotyledonous crop plants, such as cotton, sunflower, soybean, brassica crops, such as canola and oilseed rape, and some gramineous crops such as rice, wheat, rye and barley is not always satisfactory, i.e. in addition to the harmful plants, the crop plants are also damaged to an extent which is not acceptable. Though it is in principle possible to spare crop plants by lowering the application rates, the extent of the control of harmful plants is naturally also reduced.

It is known that combined application of certain different herbicides with specific action might result in an enhanced activity of a herbicide component in comparison with a simple additive action. Such an enhanced activity is also termed a synergism or synergistic activity. As a consequence, it is possible to reduce the application rates of herbicidally active compounds required for controlling the harmful plants.

WO 2005/104848 describes compositions containing a herbicidal 3-sulfonylisoxazoline compounds such as pyroxasulfone and a herbicide-antagonistically active amount of a safener. Similar compositions are known from WO 2007/006509.

US 2005/256004, for example, discloses that in a pre-emergence treatment, joint application of certain herbicidal 3-sulfonylisoxazoline compounds such as pyroxasulfone with atrazine or cyanazine results in an increased overall herbicide action against certain monocotyledonous and dicotyledonous annual broadleaf weeds (lambsquarter, green foxtail, velvetleaf) in comparison with a simple expected additive action.

WO 2006/097322 discloses a herbicidal composition comprising pyroxasulfone and a second herbicide selected from tembotrione, topramezone and 4-hydroxy-3-[[2-[(2-methoxyethoxy)methyl]-6-(trifluoromethyl-3-pyridinyl]carbonyl]bicyclo[3.2.1]oct-3-ene-2-one.

WO 2006/097509 discloses a herbicidal composition comprising a herbicidal 3-sulfonylisoxazoline compound such as pyroxasulfone and a phenyluracil compound.

Unfortunately, it is usually not possible to predict synergistic activity for combinations of known herbicides, even if the compounds show a close structural similarity to known synergistic combinations.

Summary of the invention

It is an object of the present invention to provide herbicidal compositions, which show enhanced herbicide action in comparison with the herbicide action of pyroxasulfone against undesirable harmful plants, in particular against Alopecurus myosuroides, Avena fatua, Bromus spec., Echinocloa spec. Lolium spec., Phalaris spec., Setaria spec., Digitaria spec., Brachiaria spec., Amaranthus spec., Chenopodium spec., Abutilon theophrasti, Galium aparine, Veronica spec., or Solanum spec. and/or to improve their compatibility with crop plants, in particular improved compatibility with wheat, barley, rye, rice, soybean, sunflower, brassica crops and/or cotton. The composition should also have a good herbicidal activity in post-emergence applications. The compositions should also show an accelerated action on harmful plants, i.e. they should effect damaging of the harmful plants more quickly in comparison with application of the individual herbicides.

We have found that this object is achieved, surprisingly, by synergistic herbicidally active compositions comprising

a) pyroxasulfone, i.e. 3-[5-(difluoromethoxy)-1-methyl-3-(trifluoromethyl)pyrazol-4-ylmethylsulfonyl]-4,5-dihydro-5,5-dimethyl-1,2-oxazole (hereinafter also referred to as herbicide A);
and

b) herbicide compound B which is metazachlor;

where the herbicidally acitive compositions besides herbicide A and metazachlor comprise no further herbicide D, different from herbicide A and metazachlor; and wherein the relative amount of herbicide A to metazachlor is from 250:1 to 1:250.

This object, surprisingly, is also achieved by herbicidally active compositions comprising

a) a herbicide A which is 3-[5-(difluoromethoxy)-1-methyl-3-(trifluoromethyl)pyrazol-4-ylmethylsulfonyl]-4,5-dihydro-5,5-dimethyl-1,2-oxazole;

b) metazachlor;
and either

c) a herbicide compound selected from quinmerac, aminopyralid, their salts and clomazone, or

c) a herbicide D which is selected from imidazolinone herbicides from the group consisting of imazamox, imazapic and their salts and their esters.

The invention relates in particular to compositions in the form of herbicidally active compositions as defined above.

The invention furthermore relates to the use of a composition as defined herein for controlling undesirable vegetation, in particular in crops. When using the compositions of the invention for this purpose the herbicide A and the herbicide B can be applied simultaneously or in succession, where undesirable vegetation may occur.

The invention furthermore relates to the use of a composition as defined herein for controlling undesirable vegetation in crops which, by genetic engineering or by breeding, are resistant or tolerant to one or more herbicides and/or pathogens such as plant-pathogenous fungi, and/or to attack by insects; preferably resistant or tolerant to one or more herbicides that act as VLCFA synthesis inhibitors.

The invention furthermore relates to a method for controlling undesirable vegetation, which comprises applying an herbicidal composition according to the present invention to the undesirable plants. Application can be done before, during and/or after, preferably during and/or after, the emergence of the undesirable plants. The herbicide A and the herbicide B can be applied simultaneously or in succession.

The invention in particular relates to a method for controlling undesirable vegetation in crops, which comprises applying an herbicidal composition according to the present invention in crops where undesirable vegetation occurs or might occur.

The invention furthermore relates to a method for controlling undesirable vegetation, which comprises allowing a composition according to the present invention to act on plants, their habitat or on seed.

In the uses and methods of the present invention it is immaterial whether the herbicide A and the herbicide B are formulated and applied jointly or separately, and, in the case of separate application, in which order the application takes place. It is only necessary, that the herbicide A and the herbicide B are applied in a time frame, which allows simultaneous action of the active ingredients on the plants.

The invention also relates to a herbicide formulation, which comprises a herbicidally active composition as defined herein and at least one carrier material, including liquid and/or solid carrier materials.

Detailed description of the invention

Surprisingly, the compositions according to the invention have better herbicidal activity against harmful plants than would have been expected by the herbicidal activity of the individual compounds. In other words, the joint action of pyroxasulfone and the herbicide B results in an enhanced activity against harmful plants in the sense of a synergy effect (synergism). For this reason, the compositions can, based on the individual components, be used at lower application rates to achieve a herbicidal effect comparable to the individual components. Moreover, the compositions of the present invention provide good post-emergence herbicidal activity, i.e. the compositions are particularly useful for combating/controlling harmful plants after their emergence. Apart form that, the compositions of the present invention show good crop compatibility, i.e. their use in crops leads to a reduced damage of the crop plants and/or does not result in increased damage of the crop plants.

As used herein, the terms "controlling" and "combating" are synonyms.

As used herein, the terms "undesirable vegetation" and "harmful plants" are synonyms.

The compositions of the invention comprise pyroxasulfone as a first component a).

As a second component b), the compositions of the invention comprise metazachlor which is an inhibitor of the VLCFA synthesis (VLCFA inhibitor). VLCFA inhibitors are compounds which have a mode of action comprising the inhibition of the VLCA synthesis and/or the inhibition of cell division in plants and which belong to the group K3 of the HRAC classification system (see HRAC, Classification of Herbicides According to Mode of Action, http://www.plantprotection.org/hrac/MOA.html).

In the compositions of the present invention the relative weight ratio of pyroxasulfone to herbicide B is preferably in the range from 1:250 to 250:1, in particular in the range of 1:200 to 200:1 and more preferably from 150:1 to 1:150. Accordingly, in the methods and uses of the invention, pyroxasulfone and the herbicide B are applied within these weight ratios.

The compositions of the invention may also comprise, as a component c), one or more safeners. Safeners, also termed as herbicide safeners, are organic compounds which in some cases lead to better crop plant compatibility when applied jointly with specifically acting herbicides. Some safeners are themselves herbicidally active. In these cases, the safeners act as antidote or antagonist in the crop plants and thus reduce or even prevent damage to the crop plants. However, in the compositions of the present invention, safeners are generally not required. Therefore, a preferred embodiment of the invention relates to compositions which contain no safener or virtually no safener (i.e. less than 1 % by weight, based on the total amount of herbicide A and herbicide B).

Suitable safeners, which can be used in the compositions according to the present invention, are known in the art, e.g. from

The Compendium of Pesticide Common Names (http://www.alanwood.net/pesticides/); Farm Chemicals Handbook 2000 Vol. 86, Meister Publishing Company, 2000;

B. Hock, C. Fedtke, R. R. Schmidt, Herbizide, Georg Thieme Verlag, Stuttgart 1995; W. H. Ahrens, Herbicide Handbook, 7th Edition, Weed Science Society of America, 1994; and

K. K. Hatzios, Herbicide Handbook, Supplement to 7th Edition, Weed Science Society of America, 1998.

Safeners include e.g. benoxacor, cloquintocet, cyometrinil, cyprosulfamide, dichlormid, dicyclonon, dietholate, fenchlorazole, fenclorim, flurazole, fluxofenim, furilazole, isoxadifen, mefenpyr, mephenate, naphthalic anhydride, 2,2,5-trimethyl-3-(dichloracetyl)-1,3-oxazolidine, 4-(dichloroacetyl)-1-oxa-4-azaspiro[4.5]decane and oxabetrinil, as well as thereof agriculturally acceptable salts and, provided they have a carboxyl group, their agriculturally acceptable derivatives. 2,2,5-Trimethyl-3-(dichloroacetyl)-1,3-oxazolidine [CAS No. 52836-31-4] is also known under the name R-29148.4-(Dichloroacetyl)-1-oxa-4- azaspiro[4.5]decane [CAS No. 71526-07-03] is also known under the names AD-67 and MON 4660.

As a safener, the compositions according to the invention particularly preferably comprise at least one of the compounds selected from the group of benoxacor, cloquintocet, cyprosulfamide, dichlormid, fenchlorazole, fenclorim, fluxofenim, furilazole, isoxadifen, mefenpyr, naphthalic anhydride, 2,2,5-trimethyl-3-(dichloroacetyl)-1,3-oxazolidine, and 4-(dichloroacetyl)-1-oxa-4-azaspiro[4.5]decane and oxabetrinil; and the agriculturally acceptable salt thereof and, in the case of compounds having a COOH group, an agriculturally acceptable derivative as defined below.

A preferred embodiment of the invention relates to compositions which contain no safener or virtually no safener (i.e. less than 1 % by weight, based on the total amount of herbicide A and the herbicide B is applied).

The compositions of the invention may also comprise, as a component d), one or more specific herbicides D which are different from the herbicides A and B. Such further herbicides D may broaden the activity spectrum of the inventive compositions. However, further herbicides D are generally not required. Therefore, a preferred embodiment of the invention relates to compositions which contain no further herbicide D or virtually no further herbicide D (i.e. less than 1 % by weight, based on the total amount of herbicide A and herbicide B).

According to a particularly preferred embodiment of the invention the composition is a synergistic one that comprises pyroxasulfone, metazachlor and no further herbicide D, wherein the relative amount of pyroxasulfone to metazachlor is from 250:1 to 1:250.

Another embodiment of the invention however relates to compositions which contain a herbicide D selected from the group consisting of quinmerac, salts of quinmerac and clomazone. A similar embodiment of the invention relates to compositions which contain a herbicide D selected from the group consisting of aminopyralid and the salts thereof.

In particular, the compositions of the present invention consist of the herbicide A, the herbicide B and a herbicide D selected from quinmerac, aminopyralid, their salts and clomazone, i.e. they neither contain a safener nor a further herbicide D other than quinmerac, salts of quinmerac, aminopyralid, salts of aminopyralid and clomazone.

If compositions of the present invention contain clomazone or quinmerac, the relative weight ratio of clomazone, aminopyralid or quinmerac to herbicide B is preferably in the range from 1:200 to 200:1, in particular in the range of 1:100 to 100:1 and more preferably from 1:50 to 50:1. The weight ratio of pyroxasulfone to the total amount of herbicide B + clomazone or quinmerac is then preferably from 1:500 to 250:1, in particular in the range of 1:250 to 100:1 and more preferably from 1:200 to 50:1.

A further embodiment of the invention relates to compositions which additionally comprise a herbicide D selected from the group consisting of imidazolinone herbicides, selected from imazamox, imazapic and their salts and their esters, and their mixtures with quinmerac, aminopyralid or their salts or clomazone. In the embodiment, the composition of the present invention preferably consists of herbicide A, herbicide B, and the further herbicide D which is selected from imidazolinone herbicides, selected from imazamox, imazapic and their salts and their esters, and their mixtures with quinmerac, aminopyralid or their salts or clomazone, i.e. they neither contain a safener nor a further herbicide D other than an imidazolinone herbicide selected from imazamox, imazapic and their salts and their esters, quinmerac, aminopyralid or a salt thereof or clomazone.

In the compositions of this particular embodiment the relative weight ratio of pyroxasulfone to imidazolinone herbicide D is preferably in the range from 1:500 to 500:1, in particular in the range from 1:250 to 250:1 and more preferably from 100:1 to 1:100. Accordingly, in the methods and uses of the invention, pyroxasulfone and the imidazolinone herbicide are applied within these weight ratios.

Another embodiment of the invention relates to compositions which, besides one or more of the aforementioned specific herbicides D, additionally comprise at least one further herbicide D which is selected from herbicides that are inhibitors of the photosystem II, which are also termed as PS-II inhibitors or ETP inhibitors. PS-II inhibitors are compounds, which have a mode of action comprising the inhibition of the electron transfer in photosystem II of the photosynthesis in plants and which belong to the groups C1 to C3 of the HRAC classification system (see HRAC, Classification of Herbicides According to Mode of Action, http://www.plantprotection.org/hrac/MOA.html). In this embodiment, the composition of the present invention preferably consists of herbicide A, the at least one herbicide B, and the further herbicide D which is selected from PS-II inhibitor herbicides, i.e. they neither contain a safener nor a further herbicide D other than a herbicide of the group of PS-II inhibitors.

Preferably, the PS-II inhibitors are selected from the group consisting of:

d.1 arylurea herbicides;
d.2 triazin(di)one herbicides;
d.3 methylthiotriazine herbicides; and
d.4 chlorotriazine herbicides.

Arylurea herbicides (d.1) include e.g. chlorbromuron, chlorotoluron, chloroxuron, dimefuron, diuron, ethidimuron, fenuron, fluometuron, isoproturon, isuron, linuron, methabenzthiazuron, metobromuron, metoxuron, monolinuron, neburon, siduron, tetrafluron and thebuthiuron. Preferred arylurea herbicides herbicides (d.1) include chlortoluron, diuron, linuron, isoproturon and tebuthiuron, with particular preference given to diuron and tebuthiuron.

Triazin(di)one herbicides (d.2) include e.g. ametridione, amibuzin, hexazinone, isomethiozin, metamitron and metribuzin. Preferred triazin(di)one herbicides (d.2) include hexazinone and metribuzin.

Methylthiotriazine herbicides (d.3) include e.g. ametryn, aziprotryne, cyanatryn, desmetryn, dimethametryn, methoprotryne, prometryn, simetryn and terbutryn. Preferred methylthiotriazine herbicide is ametryn.

Chlorotriazine herbicides (d.4) include e.g. atrazine, chlorazin, cyanazin, cyprazine, propazin, simazin, terbuthylazine and trietazine. Preferred chlorotriazine herbicide is atrazine and terbuthylazine.

Arylurea herbicides (group d.1), triazin(di)one herbicides (group d.2), methylthiotriazine herbicides (group d.3) and chlorotriazine herbicides (group d.3)are known e.g. from K.-W. Münks and K.-H. Müller "Photosynthesis Inhibitors" in "Modern Crop Protection Compounds" Vol. 1, Wiley-VHC 2007, pp 359-400; C.D.S. Tomlin, "The Pesticide Manual", 13th Edition, BCPC (2003), and also from The Compendium of Pesticide Common Names, http://www.alanwood.net/pesticides/.

In the compositions of this particular embodiment the relative weight ratio of pyroxasulfone to PS-II inhibitor herbicide D is preferably in the range from 1:500 to 500:1, in particular in the range from 1:250 to 250:1 and more preferably from 100:1 to 1:100. Accordingly, in the methods and uses of the invention, pyroxasulfone and the herbicide D are applied within these weight ratios.

Another embodiment of the invention relates to compositions which, besides one or more of the aforementioned specific herbicides D, additionally comprise at least one further herbicide D which is selected from herbicides that are inhibitors of the 4-hydroxyphenylpyruvate dioxygenase, which are also termed as HPPD inhibitors. HPPD inhibitors are herbicide compounds, which have a mode of action comprising the inhibition of the 4-hydroxyphenylpyruvate dioxygenase in plants and which belong to the group F2 of the HRAC classification system (see HRAC, Classification of Herbicides According to Mode of Action, http://www.plantprotection.org/hrac/MOA.html). In this embodiment, the composition of the present invention preferably consists of herbicide A, the at least one herbicide B, and the further herbicide D which is selected from HPPD inhibitor herbicides, i.e. they neither contain a safener nor a further herbicide D other than a herbicide of the group of HPPD inhibitors.

HPPD inhibitor herbicides include e.g. isoxaflutole, sulcotrione, mesotrione, tembotrione, topramezone, and the salts thereof. In this embodiment compositions are preferred, where the HPPD inhibitor herbicide is topramezone or a salt thereof.

In the compositions of this particular embodiment the relative weight ratio of pyroxasulfone to HPPD inhibitor herbicide D is preferably in the range from 1:100 to 100:1, in particular in the range from 1: 50 to 50:1. Accordingly, in the methods and uses of the invention, pyroxasulfone and the herbicide D are applied within these weight ratios.

If the compounds of herbicide compounds mentioned as herbicides B, herbicides D and safeners (see below) have functional groups, which can be ionized, they can also be used in the form of their agriculturally acceptable salts. In general, the salts of those cations are suitable whose cations have no adverse effect on the action of the active compounds ("agricultural acceptable").

In general, the salts of those cations are suitable whose cations have no adverse effect on the action of the active compounds ("agricultural acceptable"). Preferred cations are the ions of the alkali metals, preferably of lithium, sodium and potassium, of the alkaline earth metals, preferably of calcium and magnesium, and of the transition metals, preferably of manganese, copper, zinc and iron, furthermore ammonium and substituted ammonium (hereinafter also termed as organoammonium) in which one to four hydrogen atoms are replaced by $C_1$-$C_4$-alkyl, hydroxy-$C_1$-$C_4$-alkyl, $C_1$-$C_4$-alkoxy-$C_1$-$C_4$-alkyl, hydroxy-$C_1$-$C_4$-alkoxy-$C_1$-$C_4$-alkyl, phenyl or benzyl, preferably ammonium, methylammonium, isopropylammonium, dimethylammonium, diisopropylammonium, trimethylammonium, tetramethylammonium, tetraethylammonium, tetrabutylammonium, 2-hydroxyethylammonium, 2-(2-hydroxyethoxy)eth-1-ylammonium (diglycolamine salts), di(2-hydroxyeth-1-yl)ammonium (diolamine salts), tris((2-hydroxyeth-1-yl)ammonium (trolamine salts), tris(3-propanol)amonium, benzyltrimethylammonium, benzyltriethylammonium, furthermore phosphonium ions, sulfonium ions, preferably tri($C_1$-$C_4$-alkyl)sulfonium such as trimethylsulfonium, and sulfoxonium ions, preferably tri($C_1$-$C_4$-alkyl)sulfoxonium.

In the compositions according to the invention, the compounds that carry a carboxyl group can also be employed in the form of agriculturally acceptable derivatives, for example as amides such as mono- or di-$C_1$-$C_6$-alkylamides or arylamides, as esters, for example as allyl esters, propargyl esters, $C_1$-$C_{10}$-alkyl esters or alkoxyalkyl esters, and also as thioesters, for example as $C_1$-$C_{10}$-alkyl thioesters. Preferred mono- and di-$C_1$-$C_6$-alkylamides are the methyl- and the dimethylamides. Preferred arylamides are, for example, the anilidines and the 2-chloroanilides. Preferred alkyl esters are, for example, the methyl, ethyl, propyl, isopropyl, butyl, isobutyl, pentyl, mexyl (1-methylhexyl) or isooctyl (2-ethylhexyl) esters. Preferred $C_1$-$C_4$-alkoxy-$C_1$-$C_4$-alkyl esters are the straight-chain or branched $C_1$-$C_4$-alkoxyethyl esters, for example the methoxyethyl, ethoxyethyl or butoxyethyl esters. An example of the straight-chain or branched $C_1$-$C_{10}$-alkyl thioesters is the ethyl thioester. Preferred derivatives are the esters.

The compositions of the present invention are suitable for controlling a large number of harmful plants, including monocotyledonous weeds, in particular annual weeds such as gramineous weeds (grasses) including Echinochloa species such as barnyardgrass (Echinochloa crusgalli var. crus-galli), Digitaria species such as crabgrass (Digitaria sanguinalis), Setaria species such as green foxtail (Setaria viridis) and giant foxtail (Setaria faberii), Sorghum species such as johnsongrass (Sorghum halepense Pers.), Avena species such as wild oats (Avena fatua), Cenchrus species such as Cenchrus echinatus, Bromus species, Lolium species, Phalaris species, Eriochloa species, Panicum species, Brachiaria species, annual bluegrass (Poa annua), blackgrass (Alopecurus myosuroides), Aegilops cylindrica, Agropyron repens, Apera spica-venti, Eleusine indica, Cynodon dactylon and the like.

The compositions of the present invention are also suitable for controlling a large number of dicotyledonous weeds, in particular broad leaf weeds including Polygonum species such as wild buckwheat (Polygonum convolvolus), Amaranthus species such as pigweed (Amaranthus retroflexus), Chenopodium species such as common lambsquarters (Chenopodium album L.), Sida species such as prickly sida (Sida spinosa L.), Ambrosia species such as common ragweed (Ambrosia artemisiifolia), Acanthospermum species, Anthemis species, Atriplex species, Cirsium species, Convolvulus species, Conyza species, Cassia species, Commelina species, Datura species, Euphorbia species, Geranium species, Galinsoga species, morningglory (Ipomoea species), Lamium species, Malva species, Matricaria species, Sysimbrium species, Solanum species, Xanthium species, Veronica species, Viola species, common chickweed (Stellaria media), velvetleaf (Abutilon theophrasti), Hemp sesbania (Sesbania exaltata Cory), Anoda cristata, Bidens pilosa, Brassica kaber, Capsella bursa-pastoris, Centaurea cyanus, Galeopsis tetrahit, Galium aparine, Helianthus annuus, Desmodium tortuosum, Kochia scoparia, Mercurialis annua, Myosotis arvensis, Papaver rhoeas, Raphanus raphanistrum, Salsola kali, Sinapis arvensis, Sonchus arvensis, Thlaspi arvense, Tagetes minuta, Richardia brasiliensis, and the like.

The compositions of the present invention are also suitable for controlling a large number of annual and perennial sedge weeds including cyperus species such as purple nutsedge (Cyperus rotundus L.), yellow nutsedge (Cyperus esculentus L.), hime-kugu (Cyperus brevifolius H.), sedge weed (Cyperus microiria Steud), rice flatsedge (Cyperus iria L.), and the like.

The compositions according to the present invention are suitable for combating/controlling common harmful plants in useful plants (i.e. in crops). The compositions of the present invention are generally suitable for combating/controlling undesired vegetation in

- Grain crops, including e.g.

  - cereals (small grain cereals) such as wheat (*Triticum aestivum*) and wheat like crops such as durum (T. durum), einkorn (*T. monococcum),* emmer (*T. dicoccon*) and spelt (*T. spelta),* rye (*Secale cereale),* triticale (*Tritiosecale*), barley (*Hordeum vulgare*);

- maize (corn; *Zea mays*);
- sorghum (e.g. *Sorghum bicolour*);
- rice (*Oryza spp.* such as *Oryza sativa* and *Oryza glaberrima*); and
- sugar cane;

- Legumes (*Fabaceae*), including e.g. soybeans (Glycine max.), peanuts (*Arachis hypogaea* and pulse crops such as peas including *Pisum sativum,* pigeon pea and cowpea, beans including broad beans (*Vicia faba*), *vigna spp.*, and *Phaseolus spp.* and lentils (*lens culinaris var.*);
- brassicaceae, including e.g. canola (*Brassica napus*), oilseed rape (*Brassica napus*), cabbage (*B. oleracea var.*), mustard such as *B. juncea, B. campestris, B. narinosa, B. nigra* and *B. tournefortii*; and turnip (*Brassica rapa var.*);
- other broadleaf crops including e.g. sunflower, cotton, flax, linseed, sugarbeet, potato and tomato;
- TNV-crops (TNV: trees, nuts and vine) including e.g. grapes, citrus, pomefruit, e.g. apple and pear, coffee, pistachio and oilpalm, stonefruit, e.g. peach, almond, walnut, olive, cherry, plum and apricot;
- turf, pasture and rangeland;
- onion and garlic;
- bulb ornamentals such as tulips and narcissus;
- garden ornamentals such as roses, petunia, marigold, snap dragon; and
- conifers and deciduous trees such as pinus, fir, oak, maple, dogwood, hawthorne, crabapple, and rhamnus (buckthorn).

The compositions of the present invention are in particular suitable for combating/controlling undesired vegetation in wheat, barley, rye, triticale, durum, rice, corn, sugarcane, sorghum, soybean, pulse crops such as pea, bean and lentils, peanut, sunflower, sugarbeet, potato, cotton, brassica crops, such as oilseed rape, canola, mustard, cabbage and turnip, turf, grapes, pomefruit, such as apple and pear, stonefruit, such as peach, almond, walnut, olive, cherry, plum and apricot, citrus, coffee, pistachio, garden ornamentals, such as roses, petunia, marigold, snap dragon, bulb ornamentals such as tulips and narcissus, conifers and deciduous trees such as pinus, fir, oak, maple, dogwood, hawthorne, crabapple and rhamnus.

The compositions of the present invention are most suitable for combating/controlling undesired vegetation in wheat, barley, rye, triticale, durum, rice, corn, sugarcane, sorghum, soybean, pulse crops such as pea, bean and lentils, peanut, sunflower, sugarbeet, potato, cotton, brassica crops, such as oilseed rape, canola, mustard, cabbage and turnip, turf, grapes, stonefruit, such as peach, almond, walnut, olive, cherry, plum and apricot, citrus and pistachio.

If not stated otherwise, the compositions of the invention are suitable for application in any variety of the aforementioned crop plants.

The compositions of the invention are particularly suitable for application in wheat, barley, rye, corn, sugarcane, sorghum, soybean, pulse crops, sunflower, sugarbeet, potato, brassica crops and turf.

The compositions according to the invention can also be used in crop plants which are resistant or tolerant to one or more herbicides owing to genetic engineering or breeding, which are resistant or tolerant to one or more pathogens owing to genetic engineering or breeding, or which are resistant or tolerant to attack by insects owing to genetic engineering or breeding. Suitable are for example crop plants, preferably corn, wheat, sorghum, barley, sunflower, rice, canola, oilseed rape, soybeans or lentils which are resistant or tolerant to the herbicidal VLCA inhibitor metazachlor, or crop plants which, owing to introduction of the gene for Bt toxin by genetic modification, are resistant to attack by certain insects.

The compositions of the present invention can be applied in conventional manner by using techniques a skilled person is familiar with. Suitable techniques include spraying, atomizing, dusting, spreading or watering. The type of application depends on the intended purpose in a well known manner; in any case, the technique should ensure the finest possible distribution of the active ingredients according to the invention.

The compositions can be applied pre- or post-emergence, i.e. before, during and/or after emergence of the undesirable plants. When the compositions are used in crops, they can be applied after seeding and before the emergence of the crop plants. The compositions invention can, however, also be applied prior to seeding of the crop plants.

It is a particular benefit of the compositions according to the invention that they have a very good post-emergence herbicide activity, i.e. they show a good herbicidal activity against emerged undesirable plants. Thus, in a preferred embodiment of invention, the compositions are applied post-emergence, i.e. during and/or after the emergence of the undesirable plants. It is particularly advantageous to apply the mixtures according to the invention post-emergent when the undesirable plant starts with leaf development of up to 6 leaves. Since the composition show good crop tolerance, even when the crop has already emerged, they can be applied after seeding of the crop plants and in particular during or after the emergence of the crop plants.

In any case herbicide A and the herbicide B and the optional further actives (safener C and herbicide D) can be applied simultaneously or in succession.

The compositions are applied to the plants mainly by spraying, in particular foliar spraying. Application can be carried out by customary spraying techniques using, for example, water as carrier and spray liquor rates of from about 10 to 2000 l/ha or 50 to 1000 l/ha (for example from 100 to 500 l/ha). Application of the herbicidal compositions by the low-volume and the ultra-low-volume method is possible, as is their application in the form of microgranules.

If the active ingredients are less well tolerated by certain crop plants, application techniques may be used in which the herbicidal compositions are sprayed, with the aid of the spray apparatus, in such a way that they come into as little contact, if any, with the leaves of the sensitive crop plants while reaching the leaves of undesirable plants, which grow underneath, or the bare soil (post-directed, lay-by).

In the case of a post-emergence treatment of the plants, the herbicidal mixtures or compositions according to the invention are preferably applied by foliar application. Application may be effected, for example, by usual spraying techniques with water as the carrier, using amounts of spray mixture of approx. 50 to 1000 l/ha.

The required application rate of the composition of the pure active compounds, i.e. of pyroxasulfone, herbicide B and optionally safener or herbicide D depends on the density of the undesired vegetation, on the development stage of the plants, on the climatic conditions of the location where the composition is used and on the application method. In general, the application rate of the composition (total amount of pyroxasulfone, herbicide B and optional further actives) is from 15 to 6000 g/ha, frequently from 15 to 5000 g/ha, preferably from 20 to 2500 g/ha of active substance.

The required application rates of pyroxasulfone are generally in the range from 1 g/ha to 500 g/ha and preferably in the range from 5 g/ha to 400 g/ha or from 10 g/ha to 300 g/ha of active substance.

The required application rates of the herbicide B are generally in the range from 1 g/ha to 5000 g/ha and preferably in the range from 5 g/ha to 4000 g/ha or from 10 g/ha to 3000 g/ha of active substance.

The required application rates of the safener, if applied, are generally in the range from 1 g/ha to 5000 g/ha and preferably in the range from 2 g/ha to 5000 g/ha or from 5 g/ha to 5000 g/ha of active substance. Preferably no safener or virtually no safener is applied and thus the application rates are below 5 g/ha, in particular below 2 g/ha or below 1 g/ha.

The required application rates of the further herbicide D, if applied, depends from the nature of the herbicide D and may generally be in the range from 0.1 g/ha to 5000 g/ha and preferably in the range from 0.1 g/ha to 5000 g/ha or from 1 g/ha to 5000 g/ha of active substance.

In case of imidazolinone herbicides, the application rate is generally in the range of 0.1 to 500 g/ha, preferably from 1 to 250 g/ha, in particular from 2 to 200 g/ha of active substance.

In case of PS-II inhibitor herbicides, the application rate is generally in the range of 1 g/ha to 5000 g/ha and preferably in the range from 5 g/ha to 4000 g/ha or from 10 g/ha to 3000 g/ha of active substance.

In case of HPPD inhibitor herbicides, the application rate is generally in the range of 1 g/ha to 1000 g/ha and preferably in the range from 5 g/ha to 750 g/ha or from 10 g/ha to 500 g/ha of active substance.

According to the invention, the component b) is the chloroacetamide herbicide metazachlor. Chloroacetamide herbicides are known from e.g. C.D.S. Tomlin, "The Pesticide Manual", 13th Edition, BCPC (2003), and also from The Compendium of Pesticide Common Names, http://www.alanwood.net/pesticides/.

In further preferred compositions of the invention, the compositions comprise, in addition to the herbicide B, quinmerac or a salt thereof or clomazone. Thus, these compositions may be regarded as comprising a mixture of quinmerac or a salt thereof or clomazone and metazachlor.

In further particular preferred compositions of the invention, the compositions comprise or in particular are mixtures of pyroxasulfone, quinmerac or a salt thereof and metazachlor.

In further particular preferred compositions of the invention, the compositions comprise or in particular are mixtures of pyroxasulfone, clomazone and metazachlor.

In further preferred compositions of the invention, the compositions comprise or in particular are mixtures of aminopyralid or a salt thereof and metazachlor.

In further particular preferred compositions of the invention, the compositions comprise or in particular are mixtures of pyroxasulfone, aminopyralid or a salt thereof and metazachlor.

The rate of application of pyroxasulfone is usually from 1 g/ha to 500 g/ha and preferably in the range from 5 g/ha to 400 g/ha or from 10 g/ha to 300 g/ha of active substance (a.s.).

The rate of application of metazachlor is usually 1 to 5000 g/ha, as a rule 5 to 4000 g/ha, preferably 10 to 3000 g/ha, of active substance (a.s.).

If present, the rate of application of quinmerac is usually 1 to 1500 g/ha, as a rule 5 to 1000 g/ha, preferably 10 to 750 g/ha, of active substance (a.s.).

If present, the rate of application of clomazone is usually 1 to 2000 g/ha, as a rule 5 to 1500 g/ha, preferably 10 to 1000 g/ha, of active substance (a.s.).

If present, the rate of application of aminopyralid is usually 1 to 1500 g/ha, as a rule 5 to 1000 g/ha, preferably 10 to 750 g/ha, of active substance (a.s.).

If compositions of the invention contain clomazone, aminopyralid or quinmerac, the relative weight ratio of clomazone, aminopyralid or quinmerac to metazachlor is preferably in the range from 1:200 to 200:1, in particular in the range of 1:100 to 100:1 and more preferably from 1:50 to 50:1. The weight ratio of pyroxasulfone to the total amount of metazachlor + clomazone, aminopyralid or quinmerac is then preferably from 1:500 to 250:1, in particular in the range of 1:250 to 100:1 and more preferably from 1:200 to 50:1.

The compositions of the invention are particularly suitable for controlling mono- and dicotyledonous weeds and sedge weeds, in particular Alopecurus myosuroides, Apera spica-venti, Avena fatua, Brachiaria spec., Bromus spec., Cenchrus spec., Digitaria spec., Echinochloa spec., Eleusine indica, Eriochloa spec., Geranium spec., Lolium spec., Panicum spec., Phalaris spec., Poa annua, Setaria spec., Sorghum spec., Abuthilon theoprasti, Amaranthus spec., Atriplex spec., Brassica kaber, Capsella bursa-pastoris, Chenopodium spec., Conyza spec., Euphorbia spec., Galium aparine, Kochia scoparia, Polygonum spec., Raphanus raphanistrum, Sinapis arvensis, Solanum spec., Sysimbrium spec., Thlaspi arvense, Commelina spec. and Cyperus spec.

The compositions of the invention are in particular suitable for combating undesired vegetation in wheat, barley, rye, triticale, durum, rice, corn, sugarcane, sorghum, soybean, pulse crops such as pea, bean and lentils, peanut, sunflower, sugarbeet, potato, cotton, brassica crops, such as oilseed rape, canola, mustard, cabbage and turnip, turf, grapes, stonefruit, such as peach, almond, walnut, olive, cherry, plum and apricot, citrus and pistachio.

If not stated otherwise, the compositions of the invention are suitable for application in any variety of the aforementioned crop plants.

The compositions of the invention are particularly suitable for application in wheat, barley, corn, sugarcane, sorghum, soybean, pulse crops, peanut, sunflower, potato, cotton, brassica crops and turf.

Compositions of the invention, which comprise a mixture of metazachlor and a further herbicide, selected from quinmerac, a salt thereof, aminopyralid, a salt thereof and clomazone, can be used in the aforementioned crops. They are particularly useful for application in crops of oilseed rape, as they provide increased control of undesirable weeds at reduced application rates and thus at reduced risk of crop damage.

The compositions of the invention can preferably be used in crops which tolerate and/or are resistant to the action of VLCFA inhibitor herbicides, preferably in crops which tolerate and/or are resistant to the action of chloroacetamide herbicides, such as in particular metazachlor. The resistance and or tolerance to said herbicides may be achieved by conventional breeding and/or by genetic engineering methods.

As explained above, the compositions of the invention may additionally comprise a herbicide D selected from the group consisting of certain imidazolinone herbicides and their mixtures with quinmerac, aminopyralid or their salts or clomazone. Thus, the compositions of this particular embodiment (embodiment 1 a) comprise or preferably consist of the herbicide A, the herbicide B which is metazachlor, at least one imidazolinone herbicide, which is selected from imazapic, imazamox and the salts and esters thereof such as imazapic-ammonium or imazamox-ammonium, and optionally a further herbicide, which is selected from quinmerac, aminopyralid or a salt thereof or clomazone.

Particular preferred mixtures of the embodiment 1a are mixtures comprising or in particular consisting of:

Pyroxasulfone, metazachlor and imazamox or a salt or ester thereof (composition 1a.1); and
Pyroxasulfone, metazachlor, imazamox or a salt or ester thereof and quinmerac (composition 1a.2); and
The compositions 1a.1 and 1a.2 can be used in the aforementioned crops. The compositions 1a.1 and 1a.2 are particularly useful for application in crops of oilseed rape and sunflowers, as they provide increased control of undesirable weeds at reduced application rates and thus at reduced risk of crop damage.

The present invention also relates to formulations of the compositions according to the present invention. The formulations contain, besides the composition, at least one organic or inorganic carrier material. The formulations may also contain, if desired, one or more surfactants and, if desired, one or more further auxiliaries customary for crop protection compositions.

The formulation may be in the form of a single package formulation containing both the herbicide A and the herbicide B together with liquid and/or solid carrier materials, and, if desired, one or more surfactants and, if desired, one or more further auxiliaries customary for crop protection compositions. The formulation may be in the form of a two package formulation, wherein one package contains a formulation of pyroxasulfone while the other package contains a formulation of the herbicide B and wherein both formulations contain at least one carrier material, if desired, one or more surfactants and, if desired, one or more further auxiliaries customary for crop protection compositions. In the case of two package formulations the formulation containing pyroxasulfone and the formulation containing the herbicide B are mixed prior to application. Preferably the mixing is performed as a tank mix, i.e. the formulations are mixed immediately prior or upon dilution with water. If the composition comprises one or more further actives such as a safener C and/or a herbicide D, the composition may also be in the form of a three or four package formulation.

In the formulation of the present invention the active ingredients, i.e. pyroxasulfone, herbicide B and optional further actives are present in suspended, emulsified or dissolved form. The formulation according to the invention can be in the form of aqueous solutions, powders, suspensions, also highly-concentrated aqueous, oily or other suspensions or dispersions, aqueous emulsions, aqueous microemulsions, aqueous suspo-emulsions, oil dispersions, pastes, dusts, materials for spreading or granules.

Depending on the formulation type, they comprise one or more liquid or solid carriers, if appropriate surfactants (such as dispersants, protective colloids, emulsifiers, wetting agents and tackifiers), and if appropriate further auxiliaries which are customary for formulating crop protection products. The person skilled in the art is sufficiently familiar with the recipes for such formulations. Further auxiliaries include e.g. organic and inorganic thickeners, bactericides, antifreeze agents, antifoams, colorants and, for seed formulations, adhesives.

Suitable carriers include liquid and solid carriers. Liquid carriers include e.g. nonaqueous solvents such as cyclic and aromatic hydrocarbons, e.g. paraffins, tetrahydronaphthalene, alkylated naphthalenes and their derivatives, alkylated benzenes and their derivatives, alcohols such as methanol, ethanol, propanol, butanol and cyclohexanol, ketones such as cyclohexanone, strongly polar solvents, e.g. amines such as N-methylpyrrolidone, and water as well as mixtures thereof. Solid carriers include e.g. mineral earths such as silicas, silica gels, silicates, talc, kaolin, limestone, lime, chalk, bole, loess, clay, dolomite, diatomaceous earth, calcium sulfate, magnesium sulfate, magnesium oxide, ground synthetic materials, fertilizers such as ammonium sulfate, ammonium phosphate, ammonium nitrate, ureas, and products of vegetable origin such as cereal meal, tree bark meal, wood meal and nutshell meal, cellulose powders, or other solid carriers.

Suitable surfactants (adjuvants, wetting agents, tackifiers, dispersants and also emulsifiers) are the alkali metal salts, alkaline earth metal salts and ammonium salts of aromatic sulfonic acids, for example lignosulfonic acids (e.g. Borrespers-types, Borregaard), phenolsulfonic acids, naphthalenesulfonic acids (Morwet types, Akzo Nobel) and dibutylnaphthalenesulfonic acid (Nekal types, BASF SE), and of fatty acids, alkyl- and alkylarylsulfonates, alkyl sulfates, lauryl ether sulfates and fatty alcohol sulfates, and salts of sulfated hexa-, hepta- and octadecanols, and also of fatty alcohol glycol ethers, condensates of sulfonated naphthalene and its derivatives with formaldehyde, condensates of naphthalene or of the naphthalenesulfonic acids with phenol and formaldehyde, polyoxyethylene octylphenol ether, ethoxylated isooctyl-, octyl- or nonylphenol, alkylphenyl or tributylphenyl polyglycol ether, alkylaryl polyether alcohols, isotridecyl alcohol, fatty alcohol/ethylene oxide condensates, ethoxylated castor oil, polyoxyethylene alkyl ethers or polyoxypropylene alkyl ethers, lauryl alcohol polyglycol ether acetate, sorbitol esters, lignosulfite waste liquors and proteins, denatured proteins, polysaccharides (e.g. methylcellulose), hydrophobically modified starches, polyvinyl alcohol (Mowiol types Clariant), polycarboxylates (BASF SE, Sokalan types), polyalkoxylates, polyvinylamine (BASF SE, Lupamine types), polyethyleneimine (BASF SE, Lupasol types), polyvinylpyrrolidone and copolymers thereof.

Examples of thickeners (i.e. compounds which impart to the formulation modified flow properties, i.e. high viscosity in the state of rest and low viscosity in motion) are polysaccharides, such as xanthan gum (Kelzan® from Kelco), Rhodopol® 23 (Rhone Poulenc) or Veegum® (from R.T. Vanderbilt), and also organic and inorganic sheet minerals, such as Attaclay® (from Engelhardt).

Examples of antifoams are silicone emulsions (such as, for example, Silikon® SRE, Wacker or Rhodorsil® from Rhodia), long-chain alcohols, fatty acids, salts of fatty acids, organofluorine compounds and mixtures thereof.

Bactericides can be added for stabilizing the aqueous herbicidal formulations. Examples of bactericides are bactericides based on diclorophen and benzyl alcohol hemiformal (Proxel® from ICI or Acticide® RS from Thor Chemie and Kathon® MK from Rohm & Haas), and also isothiazolinone derivates, such as alkylisothiazolinones and benzisothiazolinones (Acticide MBS from Thor Chemie).

Examples of antifreeze agents are ethylene glycol, propylene glycol, urea or glycerol.

Examples of colorants are both sparingly water-soluble pigments and water-soluble dyes. Examples which may be mentioned are the dyes known under the names Rhodamin B, C.I. Pigment Red 112 and C.I. Solvent Red 1, and also pigment blue 15:4, pigment blue 15:3, pigment blue 15:2, pigment blue 15:1, pigment blue 80, pigment yellow 1, pigment yellow 13, pigment red 112, pigment red 48:2, pigment red 48:1, pigment red 57:1, pigment red 53:1, pigment orange 43, pigment orange 34, pigment orange 5, pigment green 36, pigment green 7, pigment white 6, pigment brown 25, basic violet 10, basic violet 49, acid red 51, acid red 52, acid red 14, acid blue 9, acid yellow 23, basic red 10, basic red 108.

Examples of adhesives are polyvinylpyrrolidone, polyvinyl acetate, polyvinyl alcohol and tylose.

To prepare emulsions, pastes or oil dispersions, the active the components, as such or dissolved in an oil or solvent, can be homogenized in water by means of wetting agent, tackifier, dispersant or emulsifier. Alternatively, it is possible to prepare concentrates consisting of active substance, wetting agent, tackifier, dispersant or emulsifier and, if desired, solvent or oil, and these concentrates are suitable for dilution with water.

Powders, materials for spreading and dusts can be prepared by mixing or concomitant grinding of the active the components a) and b) and optionally safener c) and/or herbicides D with a solid carrier.

Granules, e.g. coated granules, impregnated granules and homogeneous granules, can be prepared by binding the active ingredients to solid carriers.

The formulations of the invention comprise a herbicidally effective amount of the composition of the present invention. The concentrations of the active the active ingredients in the formulations can be varied within wide ranges.

In general, the formulations comprise from 1 to 98% by weight, preferably 10 to 60 % by weight, of active ingredients (sum of pyroxasulfone, herbicide B and optionally further acitves). The active ingredients are employed in a purity of from 90% to 100%, preferably 95% to 100% (according to NMR spectrum).

The active compounds A and B and optionally further actives as well as the compositions according to the invention can, for example, be formulated as follows:

1. Products for dilution with water

A Water-soluble concentrates

10 parts by weight of active compound (or composition) are dissolved in 90 parts by weight of water or a water-soluble solvent. As an alternative, wetters or other adjuvants are added. The active compound dissolves upon dilution with water. This gives a formulation with an active compound content of 10% by weight.

B Dispersible concentrates

20 parts by weight of active compound (or composition) are dissolved in 70 parts by weight of cyclohexanone with addition of 10 parts by weight of a dispersant, for example polyvinylpyrrolidone. Dilution with water gives a dispersion. The active compound content is 20% by weight.

C Emulsifiable concentrates

15 parts by weight of active compound (or composition) are dissolved in 75 parts by weight of an organic solvent (eg. alkylaromatics) with addition of calcium dodecylbenzenesulfonate and castor oil ethoxylate (in each case 5 parts by weight). Dilution with water gives an emulsion. The formulation has an active compound content of 15% by weight.

D Emulsions

25 parts by weight of active compound (or composition) are dissolved in 35 parts by weight of an organic solvent (eg. alkylaromatics) with addition of calcium dodecylbenzenesulfonate and castor oil ethoxylate (in each case 5 parts by weight). This mixture is introduced into 30 parts by weight of water by means of an emulsifier (Ultraturrax) and made into a homogeneous emulsion. Dilution with water gives an emulsion. The formulation has an active compound content of 25% by weight.

E Suspensions

In an agitated ball mill, 20 parts by weight of active compound (or composition) are comminuted with addition of 10 parts by weight of dispersants and wetters and 70 parts by weight of water or an organic solvent to give a fine active compound suspension. Dilution with water gives a stable suspension of the active compound. The active compound content in the formulation is 20% by weight.

F Water-dispersible granules and water-soluble granules

50 parts by weight of active compound (or composition) are ground finely with addition of 50 parts by weight of dispersants and wetters and made into water-dispersible or water-soluble granules by means of technical appliances (for example extrusion, spray tower, fluidized bed). Dilution with water gives a stable dispersion or solution of the active compound. The formulation has an active compound content of 50% by weight.

G Water-dispersible powders and water-soluble powders

75 parts by weight of active compound (or composition) are ground in a rotor-stator mill with addition of 25 parts by weight of dispersants, wetters and silica gel. Dilution with water gives a stable dispersion or solution of the active compound. The active compound content of the formulation is 75% by weight.

H Gel formulations

In a ball mill, 20 parts by weight of active compound (or composition), 10 parts by weight of dispersant, 1 part by weight of gelling agent and 70 parts by weight of water or of an organic solvent are mixed to give a fine suspension.

Dilution with water gives a stable suspension with active compound content of 20% by weight.

2. Products to be applied undiluted

I Dusts

5 parts by weight of active compound (or composition) are ground finely and mixed intimately with 95 parts by weight of finely divided kaolin. This gives a dusting powder with an active compound content of 5% by weight.

J Granules (GR, FG, GG, MG)

0.5 parts by weight of active compound (or composition) are ground finely and associated with 99.5 parts by weight of carriers. Current methods here are extrusion, spray-drying or the fluidized bed. This gives granules to be applied undiluted with an active compound content of 0.5% by weight.

K ULV solutions (UL)

10 parts by weight of active compound (or composition) are dissolved in 90 parts by weight of an organic solvent, for example xylene. This gives a product to be applied undiluted with an active compound content of 10% by weight.

Aqueous use forms can be prepared from emulsion concentrates, suspensions, pastes, wettable powders or water-dispersible granules by adding water.

It may furthermore be beneficial to apply the compositions of the invention alone or in combination with other herbicides, or else in the form of a mixture with other crop protection agents, for example together with agents for controlling pests or phytopathogenic fungi or bacteria. Also of interest is the miscibility with mineral salt solutions, which are employed for treating nutritional and trace element deficiencies. Other additives such as non-phytotoxic oils and oil concentrates may also be added.

Use Examples

The effect of the herbicidal compositions according to the invention of herbicides A and B and, if appropriate, safener on the growth of undesirable plants compared to the herbicidally active compounds alone was demonstrated by the following greenhouse experiments:

For the pre-emergence treatment, directly after sowing the active compounds, which had been suspended or emulsified in water, were applied by means of finely distributed nozzles. The containers were irrigated gently to promote germination and growth and subsequently covered with transparent plastic hoods until plant had rooted. This cover caused uniform germination of the tests plants, unless this was adversely affected by active compounds.

For the post-emergence treatment, the test plants were first grown to a height of 3 to 20 cm, depending on the plant habit, and only then treated. Here, the herbicidal compositions were suspended or emulsified in water as distribution medium and sprayed using finely distributing nozzles.

The respective herbicides A and/or safener were formulated as 10% by weight strength emulsion concentrate and introduced to the spray liquor with the amount of solvent system used for applying the active compound. In the examples, the solvent used was water. Herbicide B and/or safener were used as commercially available formulations and introduced to the spray liquor with the amount of solvent system used for applying the active compound. In the examples, the solvent used was water.

Metazachlor was used as a commercial aqueous suspension concentrate having an active ingredient concentration of 500 g/l.

The test period extended over 21 days. During this time, the plants were tended, and their response to the treatments with active compound was evaluated.

The evaluation for the damage caused by the chemical compositions was carried out using a scale from 0 to 100%, compared to the untreated control plants. Here, 0 means no damage and 100 means complete destruction of the plants.

The plants used in the greenhouse experiments belonged to the following species:

| Scientific Name | Code | Common Name |
|---|---|---|
| Abutilon theophrasti | ABUTH | velvetleaf |
| Agropyron repens | AGRRE | quackgrass |
| Alopecurus myosuroides | ALOMY | blackgrass |
| Amaranthus retroflexus | AMARE | pig weed |
| Ambrosia artemisifolia | AMBEL | common ragweed |
| Apera spica-venti | APESV | windgrass |
| Avena fatua | AVEFA | wild oat |
| Brachiaria plantaginea | BRAPL | alexandergrass |
| Bromus inermis | BROIN | awnless brome |
| Bromus sterilis | BROST | sterile brome |
| Brassica napus spp. napus | BRSNW | winter oilseed-rape |
| Capsella bursa-pastoris | CAPBP | sheperd's-purse |
| Cenchrus echinatus | CCHEC | sandbur |
| Chenopodium album | CHEAL | lambsquarter |
| Commelina benghalensis | COMBE | tropical spiderwort |
| Digitaria sanguinalis | DIGSA | large crabgrass |
| Echinochloa crus-galli | ECHCG | barnyardgrass |
| Eleusine indica | ELEIN | goosegrass |
| Galium aparine | GALAP | cleaver |
| Glycine max | GLXMA | soybean |
| Gossypium hirsutum | GOSHI | cotton |
| Helianthus annuus | HELAN | sunflower |
| Hordeum vulgare | HORVW | winter barley |
| Kochia scoparia | KCHSC | kochia |
| Lamium purpureum | LAMPU | red deadnettle |
| Lolium multiflorum | LOLMU | italian ryegrass |
| Matricaria inodora | MATIN | scentless mayweed |
| Mercurialis annua | MERAN | annual mercury |
| Orysa sativa | ORYSA | rice |
| Panicum dichotomiflorum | PANDI | fall panicum |
| Panicum milliaceum | PANMI | proso millet |
| Phalaris canariensis | PHACA | canarygrass |
| Ipomoea purpurea | PHBPU | tall morningglory |
| Poa annua | POAAN | annual bluegrass |
| Polygonum convolvulus | POLCO | wild buckwheat |
| Secale cereale | SECCW | winter rye |
| Setaria faberii | SETFA | giant foxtail |
| Setaria italica | SETIT | foxtail millet |
| Setaria lutescens | SETLU | yellow foxtail |

(continued)

| Scientific Name | Code | Common Name |
|---|---|---|
| Setaria viridis | SETVI | green foxtail |
| Solanum nigrum | SOLNI | black nightshade |
| Sorghum halepense | SORHA | johnsongrass |
| Stellaria media | STEME | chickweed |
| Thlaspi arvense | THLAR | field pennycress |
| Triticum aestivum | TRZAS | spring wheat |
| Triticum aestivum | TRZAW | winter wheat |
| Veronica persica | VERPE | field speedwell |
| Viola arvensis | VIOAR | field pansy |
| Xanthium strumarium | XANST | cocklebur |
| Zea mays | ZEAMX | corn |

Colby's formula was applied to determine whether the composition showed synergistic action. The value E, which is to be expected if the activity of the individual compounds is just additive, was calculated using the method of S. R. Colby (1967) "Calculating synergistic and antagonistic responses of herbicide combinations", Weeds 15, p. 22 ff.

$$E = X + Y - (X \cdot Y / 100)$$

where

$X =$   effect in percent using herbicide A at an application rate a;
$Y =$   effect in percent using herbicide B at an application rate b;
$E =$   expected effect (in %) of A + B at application rates a + b.

If the value observed in this manner is higher than the value E calculated according to Colby, a synergistic effect is present.
An accelerated activity is observed when the damage 8 days after treatment (8 DAT) achieved by the combination shows a synergistic effect.
Table 1 a relates to the herbicidal activity of the individual actives in pre-emergence application assessed 8 DAT and 20 DAT. Table 1 b relates the herbicidal activity of the combined actives in pre-emergence application assessed 8 DAT and 20 DAT.
Table 2a relates to the herbicidal activity of the individual actives in post-emergence application assessed 8 DAT and 20 DAT. Table 2b relates the herbicidal activity of the combined actives in post-emergence application assessed 8 DAT and 20 DAT.
Table 3 relates to the herbicidal activity of the individual actives and of the combinations in post-emergence application assessed 20 DAT.

Table 1a: Application in Pre-Emergence of pyroxasulfone and metazachlor (individual activities)

| | pyroxasulfone (A) | | | metazachlor (B) | | |
|---|---|---|---|---|---|---|
| weed | use rate | observed % activity | | use rate g ai/ha | observed % activity | |
| | [g ai/ha] | 8 DAT | 20 DAT | [g ai/ha] | 8 DAT | 20 DAT |
| BROIN | 25 | 50 | 60 | 47 | 35 | 30 |
| BROIN | 12.5 | 50 | 50 | 47 | 35 | 30 |
| CAPBP | 50 | 60 | 95 | 94 | 40 | 80 |
| CAPBP | 25 | 60 | 95 | 94 | 40 | 80 |

(continued)

| weed | pyroxasulfone (A) | | | metazachlor (B) | | |
|---|---|---|---|---|---|---|
| | use rate | observed % activity | | use rate g ai/ha | observed % activity | |
| | [g ai/ha] | 8 DAT | 20 DAT | [g ai/ha] | 8 DAT | 20 DAT |
| CAPBP | 6.25 | 40 | 40 | 94 | 40 | 80 |
| CAPBP | 6.25 | 40 | 40 | 47 | 40 | 70 |
| GALAP | 50 | 60 | 80 | 47 | 30 | 35 |
| MATIN | 25 | 20 | 50 | 47 | 20 | 35 |
| MATIN | 6.25 | 0 | 20 | 47 | 20 | 35 |
| THLAR | 50 | 60 | 80 | 187 | 45 | 30 |
| THLAR | 25 | 60 | 80 | 187 | 45 | 30 |
| THLAR | 6.25 | 30 | 20 | 187 | 45 | 30 |
| THLAR | 50 | 60 | 80 | 94 | 30 | 0 |
| THLAR | 12.5 | 40 | 30 | 94 | 30 | 0 |
| THLAR | 50 | 60 | 80 | 47 | 20 | 0 |
| THLAR | 25 | 60 | 80 | 47 | 20 | 0 |
| THLAR | 12.5 | 40 | 30 | 47 | 20 | 0 |

Table 1b: Application in Pre-Emergence of pyroxasulfone and metazachlor (combined activities)

| weed | pyroxasulfone + metazachlor | | | | | Synergism | |
|---|---|---|---|---|---|---|---|
| | use rate | Observed % activity | | expected % activity | | Y/N | Y/N |
| | [g ai/ha] | 8 DAT | 20 DAT | 8 DAT | 20 DAT | 8 DAT | 20 DAT |
| BROIN | 25+47 | 80 | 80 | 68 | 72 | Y | Y |
| BROIN | 12.5+47 | 75 | 75 | 68 | 65 | Y | Y |
| CAPBP | 50+94 | 90 | 100 | 76 | 99 | Y | Y |
| CAPBP | 25+94 | 90 | 100 | 76 | 99 | Y | Y |
| CAPBP | 6.25+94 | 65 | 95 | 64 | 88 | Y | Y |
| CAPBP | 6.25+47 | 70 | 85 | 64 | 82 | Y | Y |
| GALAP | 50+47 | 80 | 90 | 72 | 87 | Y | Y |
| MATIN | 25+47 | 50 | 70 | 36 | 68 | Y | Y |
| MATIN | 6.25+47 | 30 | 55 | 20 | 48 | Y | Y |
| THLAR | 50+187 | 85 | 98 | 78 | 86 | Y | Y |
| THLAR | 25+187 | 80 | 95 | 78 | 86 | Y | Y |
| THLAR | 6.25+187 | 65 | 50 | 62 | 44 | Y | Y |
| THLAR | 50+94 | 80 | 100 | 72 | 80 | Y | Y |
| THLAR | 12.5+94 | 75 | 80 | 58 | 30 | Y | Y |
| THLAR | 50+47 | 90 | 100 | 68 | 80 | Y | Y |
| THLAR | 25+47 | 90 | 98 | 68 | 80 | Y | Y |
| THLAR | 12.5+47 | 70 | 60 | 52 | 30 | Y | Y |

Table 2a: Application in Post-Emergence of pyroxasulfone and metazachlor (individual activities)

| weed | pyroxasulfone (A) | | | metazachlor (B) | | |
|---|---|---|---|---|---|---|
| | use rate | observed % activity | | use rate g ai/ha | observed % activity | |
| | [g ai/ha] | 7 DAT | 20 DAT | [g ai/ha] | 7 DAT | 20 DAT |
| VIOAR | 100 | 50 | 65 | 94 | 30 | 0 |
| VIOAR | 25 | 0 | 0 | 94 | 30 | 0 |

Table 2b: Application in Post-Emergence of pyroxasulfone and metazachlor (combined activities)

| weed | pyroxasulfone + metazachlor | | | | | Synergism | |
|---|---|---|---|---|---|---|---|
| | use rate | Observed % activity | | expected % activity | | Y/N | Y/N |
| | [g ai/ha] | 8 DAT | 20 DAT | 8 DAT | 20 DAT | 8 DAT | 20 DAT |
| VIOAR | 100+94 | 70 | 100 | 65 | 65 | Y | Y |
| VIOAR | 25+94 | 50 | 60 | 30 | 0 | Y | Y |

Table 3: Application in Post-Emergence of pyroxasulfone and metazachlor

| weed | pyroxasulfone (A) | | metazachlor (B) | | pyroxasulfone + metazachlor | | | Y/N[3] |
|---|---|---|---|---|---|---|---|---|
| | use rate | | use rate | | use rate | | | |
| | [g ai/ha] | 20 DAT[1] | [g ai/ha] | 20 DAT[1] | [g ai/ha] | 20 DAT[1] | 20 DAT[2] | 20 DAT |
| CAPBP | 25 | 35 | 94 | 45 | 25+94 | 90 | 64 | Y |
| MATIN | 50 | 0 | 750 | 80 | 50+750 | 85 | 80 | Y |
| MATIN | 25 | 0 | 750 | 80 | 25+750 | 85 | 80 | Y |
| MATIN | 100 | 20 | 187 | 60 | 100+187 | 80 | 68 | Y |
| MATIN | 50 | 0 | 187 | 60 | 50+187 | 75 | 60 | Y |
| MATIN | 25 | 0 | 187 | 60 | 25+187 | 75 | 60 | Y |
| VERPE | 100 | 90 | 187 | 80 | 100+187 | 100 | 98 | Y |
| VERPE | 100 | 90 | 94 | 60 | 100+94 | 100 | 96 | Y |
| VIOAR | 100 | 65 | 94 | 0 | 100+94 | 100 | 65 | Y |
| VIOAR | 25 | 0 | 94 | 0 | 25+94 | 60 | 0 | Y |
| 1) observed activity in % destruction 20 days after treatment<br>2) calculated from the individual activities by Colby's formula<br>3) Synergism: Y = Yes; N = No | | | | | | | | |

**Claims**

1. A synergistic herbicidal composition comprising:

a) a herbicide A which is 3-[5-(difluoromethoxy)-1-methyl-3-(trifluoromethyl)pyrazol-4-ylmethylsulfonyl]-4,5-dihydro-5,5-dimethyl-1,2-oxazole;
and
b) metazachlor;

where the herbicidal composition besides herbicide A and metazachlor comprises no further herbicide D, different from herbicide A and metazachlor; and
wherein the relative amount of herbicide A to metazachlor is from 250:1 to 1:250.

2. A herbicidal composition comprising:

a) a herbicide A which is 3-[5-(difluoromethoxy)-1-methyl-3-(trifluoromethyl)pyrazol-4-ylmethylsulfonyl]-4,5-dihydro-5,5-dimethyl-1,2-oxazole;
b) metazachlor;
and
c) a herbicide compound selected from quinmerac, aminopyralid, their salts and clomazone.

3. The composition as claimed in claim 2, further comprising a herbicide D which is selected from imidazolinone herbicides from the group consisting of imazamox, imazapic and their salts and their esters.

4. The composition as claimed in claim 3, further comprising imazamox, a salt or ester thereof or a mixture of imazamox thereof and quinmerac, including mixtures of their salts and their esters.

5. A herbicidal composition comprising:

a) a herbicide A which is 3-[5-(difluoromethoxy)-1-methyl-3-(trifluoromethyl)pyrazol-4-ylmethylsulfonyl]-4,5-dihydro-5,5-dimethyl-1,2-oxazole;
b) metazachlor;
and
c) a herbicide D which is selected from imidazolinone herbicides from the group consisting of imazamox, imazapic and their salts and their esters.

6. The composition as claimed in any of claims 2 to 5, additionally comprising a herbicide D, selected from the group consisting of atrazin, terbuthylazine, diuron, metribuzin, ametryne, hexazinone and tebuthiuron.

7. The composition as claimed in any of the preceding claims, containing no safener.

8. The use of the compositions as claimed in any of the preceding claims for controlling undesirable vegetation.

9. The use as claimed in claim 8 for controlling undesirable vegetation in crop plants.

10. The use as claimed in claim 9, where the crop plants are resistant to herbicides acting as inhibitors of the VLCFA synthesis in plants.

11. An herbicide formulation comprising a composition as claimed in any of claims 1 to 7 and at least one solid or liquid carrier.


**Patentansprüche**

1. Synergistische herbizide Zusammensetzung, umfassend:

a) ein Herbizid A, bei dem es sich um 3-[5-(Difluormethoxy)-1-methyl-3-(trifluormethyl)pyrazol-4-ylmethylsulfonyl]-4,5-dihydro-5,5-dimethyl-1,2-oxazol handelt,
und
b) Metazachlor,

wobei die herbizide Zusammensetzung neben Herbizid A und Metazachlor kein weiteres, von Herbizid A und Metazachlor verschiedenes Herbizid D umfasst, und
wobei die relative Menge an Herbizid A zu Metazachlor 250:1 bis 1:250 beträgt.

2. Herbizide Zusammensetzung, umfassend:

a) ein Herbizid A, bei dem es sich um 3-[5-(Difluormethoxy)-1-methyl-3-(trifluormethyl)pyrazol-4-ylmethylsulfonyl]-4,5-dihydro-5,5-dimethyl-1,2-oxazol handelt,
b) Metazachlor,
und
c) eine aus Quinmerac, Aminopyralid, deren Salzen und Clomazon ausgewählte Herbizidverbindung.

3. Zusammensetzung nach Anspruch 2, welche weiterhin ein aus Imidazolinonherbiziden aus der aus Imazamox, Imazapic und deren Salzen und deren Estern bestehenden Gruppe ausgewähltes Herbizid D umfasst.

4. Zusammensetzung nach Anspruch 3, welche weiterhin Imazamox, ein Salz oder einen Ester davon oder eine Mischung von Imazamox davon und Quinmerac einschließlich Mischungen von deren Salzen und deren Estern umfasst.

5. Herbizide Zusammensetzung, umfassend:

a) ein Herbizid A, bei dem es sich um 3-[5-(Difluormethoxy)-1-methyl-3-(trifluormethyl)pyrazol-4-ylmethylsulfonyl]-4,5-dihydro-5,5-dimethyl-1,2-oxazol handelt,
b) Metazachlor,
und
c) ein aus Imidazolinonherbiziden aus der aus Imazamox, Imazapic und deren Salzen und deren Estern bestehenden Gruppe ausgewähltes Herbizid D.

6. Zusammensetzung nach einem der Ansprüche 2 bis 5, welche zusätzlich ein aus der aus Atrazin, Terbuthylazin, Diuron, Metribuzin, Ametryn, Hexazinon und Tebuthiuron bestehenden Gruppe ausgewähltes Herbizid D umfasst.

7. Zusammensetzung nach einem der vorhergehenden Ansprüche, welche keinen Safener enthält.

8. Verwendung der Zusammensetzung nach einem der vorhergehenden Ansprüche zur Bekämpfung von unerwünschtem Pflanzenwuchs.

9. Verwendung nach Anspruch 8 zur Bekämpfung von unerwünschtem Pflanzenwuchs in Kulturpflanzen.

10. Verwendung nach Anspruch 9, wobei die Kulturpflanzen gegenüber als Inhibitoren der VLCFA-Synthese in Pflanzen wirkenden Herbiziden resistent sind.

11. Herbizidformulierung, umfassend eine Zusammensetzung nach einem der Ansprüche 1 bis 7 und mindestens einen festen oder flüssigen Träger.

**Revendications**

1. Composition herbicide synergique, comprenant :

a) un herbicide A qui est le 3-[5-(difluorométhoxy)-1-méthyl-3-(trifluorométhyl)pyrazol-4-ylméthyl-sulfonyl]-4,5-dihydro-5,5-diméthyl-l,2-oxazole ;
et
b) du métazachlor ;

où la composition herbicide, outre l'herbicide A et le métazachlor, ne comprend aucun autre herbicide D, différent de l'herbicide A et du métazachlor ; et
où la quantité relative de l'herbicide A au métazachlor va de 250:1 à 1:250.

2. Composition herbicide, comprenant :

a) un herbicide A qui est le 3-[5-(difluorométhoxy)-1-méthyl-3-(trifluorométhyl)pyrazol-4-ylméthyl-sulfonyl]-4,5-dihydro-5,5-diméthyl-1,2-oxazole ;
b) du métazachlor ; et
c) un composé herbicide choisi parmi le quinmérac, l'aminopyralid, leurs sels, et la clomazone.

**3.** Composition selon la revendication 2, comprenant en outre un herbicide D est qui choisi parmi les herbicides à base d'imidazolinone issus du groupe constitué par l'imazamox, l'imazapic, et leurs sels et leurs esters.

**4.** Composition selon la revendication 3, comprenant en outre de l'imazamox, un sel ou un ester de celui-ci, ou un mélange d'imazamox de celui-ci et de quinmérac, y compris des mélanges de leurs sels et leurs esters.

**5.** Composition herbicide, comprenant :

a) un herbicide A qui est le 3-[5-(difluorométhoxy)-1-méthyl-3-(trifluorométhyl)pyrazol-4-ylméthyl-sulfonyl]-4,5-dihydro-5,5-diméthyl-1,2-oxazole ;
b) du métazachlor ; et
c) un herbicide D est qui choisi parmi les herbicides à base d'imidazolinone issus du groupe constitué par l'imazamox, l'imazapic, et leurs sels et leurs esters.

**6.** Composition selon l'une quelconque des revendications 2 à 5, comprenant en outre un herbicide D choisi dans le groupe constitué par l'atrazine, la terbuthylazine, le diuron, la métribuzine, l'amétryne, l'hexazinone et le tébuthiuron.

**7.** Composition selon l'une quelconque des revendications précédentes, ne comprenant aucun phytoprotecteur.

**8.** Utilisation des compositions selon l'une quelconque des revendications précédentes, pour le contrôle de végétation indésirable.

**9.** Utilisation selon la revendication 8, pour le contrôle de végétation indésirable dans les plantes de culture.

**10.** Utilisation selon la revendication 9, dans laquelle les plantes de culture sont résistantes aux herbicides agissant comme inhibiteurs de la synthèse de VLCFA chez les plantes.

**11.** Formulation herbicide comprenant une composition selon l'une quelconque des revendications 1 à 7, et au moins un véhicule solide ou liquide.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 1364946 A
- US 20050256004 A
- WO 2005104848 A
- WO 2007006509 A
- US 2005256004 A
- WO 2006097322 A
- WO 2006097509 A

### Non-patent literature cited in the description

- **Y. YAMAJI et al.** Application timing and field performance of KIH-485. *Conference Abstract 1-1-ii-12B of 11. IUPAC International Congress of Pesticide Chemistry,* 2006
- The Compendium of Pesticide Common Names. Farm Chemicals Handbook. Meister Publishing Company, 2000, vol. 86
- **B. HOCK ; C. FEDTKE ; R. R. SCHMIDT.** Herbizide. Georg Thieme Verlag, 1995
- **W. H. AHRENS.** Herbicide Handbook. Weed Science Society of America, 1994
- **K. K. HATZIOS.** Herbicide Handbook. Weed Science Society of America, 1998
- **HRAC.** *Classification of Herbicides According to Mode of Action, http://www.plantprotection.org/hrac/MOA.html*
- Photosynthesis Inhibitors. **K.-W. MÜNKS ; K.-H. MÜLLER.** Modern Crop Protection Compounds. Wiley-VHC, 2007, vol. 1, 359-400
- **C.D.S. TOMLIN.** The Pesticide Manual. BCPC, 2003
- **S. R. COLBY.** Calculating synergistic and antagonistic responses of herbicide combinations. *Weeds,* 1967, vol. 15, 22 ff